# EUROPÄISCHE PATENTSCHRIFT

(11) **EP 3 785 871 B1**
(45) Veröffentlichungstag und Bekanntmachung des Hinweises auf die Patenterteilung: **14.01.2026**
(21) Anmeldenummer: 20187234.8
(22) Anmeldetag: 22.07.2020
(51) Int. Cl.: B26D 7/28, B26D 1/553, A01J 27/04

(54) **KÄSETEILER UND VERFAHREN ZUM MESSEN EINER LÄNGE EINES KÄSEPRODUKTS**
CHEESE DIVIDER AND METHOD FOR MEASURING A LENGTH OF A CHEESE PRODUCT
DIVISEUR DE FROMAGE ET PROCÉDÉ DE MESURE DE LA LONGUEUR D'UN PRODUIT FROMAGER

(30) Priorität: 27.08.2019 DE 102019122994
(43) Veröffentlichungstag der Anmeldung: 03.03.2021
(73) Patentinhaber: Weber Food Technology SE & Co. KG, 35236 Breidenbach (DE)
(72) Erfinder: Ritzen, Noël, 6361 JL Beekdalen (NL); Rink, Matthias, 35080 Bad Endbach (DE); Stremel, Jörg, 57334 Bad Laasphe (DE); Stöber, Andreas, 57392 Schmallenberg (DE)
(74) Vertreter: Manitz Finsterwald Patent- und Rechtsanwaltspartnerschaft mbB

(56) Entgegenhaltungen:
- EP-A2- 1 010 500
- DE-A1- 102016 120 982
- DE-A1- 19 801 781

## Beschreibung

Die vorliegende Erfindung betrifft einen Käseteiler mit zumindest einer Antriebseinheit und zumindest einem Trennwerkzeug. Zudem betrifft die vorliegende Erfindung ein Verfahren zum Messen einer Länge eines Käseprodukts, vorzugsweise unter Verwendung des beschriebenen Käseteilers.

Industriell zu verarbeitender Käse wird in der Regel in sogenannten Euroblocks hergestellt. Euroblocks sind quaderförmige Käseblöcke mit einer Abmessung von etwa 300 mm × 500 mm × 100 mm und einem Gewicht - je nach Käsesorte - von ungefähr 15 kg. Um solche Euroblocks zu handelsüblichen Portionen aufzuschneiden, durchlaufen die Euroblocks in einer Lebensmittelaufschneidelinie zunächst einen sogenannten Käseteiler, durch den die Euroblocks entlang zumindest einer Längsachse in kleinere Produktriegel geschnitten werden. Hierzu weist der Käseteiler in der Regel vertikale Trennwerkzeuge wie Klingen oder Drähte auf, durch die auf einer horizontalen Auflage, z.B. einer Rollenbahn oder einem Förderband, die Euroblocks hindurchgefördert werden. Die Produktriegel werden anschließend einer Haupt-Schneidebene der Aufschneidemaschine, d.h. des Slicers, zugeführt, um mit einem rotierenden Schneidmesser, vorzugsweise auf mehreren parallelen Spuren, die Produktriegel aufzuschneiden, d.h. mehrere Scheiben von dem Produktriegel abzuschneiden.

Aus der europäischen Patentanmeldung EP 1 010 500 A2 ist ein Käseteiler mit den Merkmalen des Oberbegriffs des Anspruchs 1 bekannt. Die deutschen Patentanmeldungen DE 198 01 781 A1 und DE 10 2016 120 982 A1 beschreiben Vorrichtungen zum Schneiden von Käse in Querrichtung.

Es ist eine Aufgabe der Erfindung, einen Käseteiler bereitzustellen, bei dem eine Längenmessung des Käseprodukts zeiteffizient erfolgt.

Die Aufgabe wird gelöst durch einen Käseteiler mit den Merkmalen des Anspruchs 1.

Eine Längenmessung des Käseproduktes ist besonders dann sinnvoll, wenn eine Anzahl der pro Käseprodukt erzeugten Produktriegel nicht einer Anzahl der Spuren des nachgeordneten Slicers entspricht. In einem solchen Fall kann die ermittelte Länge des Käseproduktes dazu verwendet werden, die Produktriegel so auf die verschiedenen Spuren des Slicers zu verteilen, dass eine Mehrzahl von hintereinander auf der jeweiligen Spur angeordnete "Produktriegel" eine ähnliche Gesamtlänge bzw. ein ähnliches Gesamtgewicht aufweisen. Hierdurch wird vermieden, dass auf einer Spur des Slicers noch aufgeschnitten wird, während auf einer anderen Spur des Slicers das Käseprodukt bereits vollständig aufgeschnitten ist. Ziel des Ganzen ist es also, alle Spuren des Slicers gleichmäßig zu beladen, sodass auf allen Bahnen des Slicers eine ähnliche Menge Käseprodukt verarbeitet wird und so Leerverpackungen vermieden werden. Die Längenmessung mittels des Käseteilers erlaubt es zudem, dass ein Roboterarm die Produktriegel durch die Kenntnis ihrer Länge so zueinander ablegen kann, dass ein Versatz möglichst gering ist, ohne die Riegel noch einmal gesondert vermessen zu müssen.

Indem die Längenmessung in den Käseteiler integriert ist, kann eine Gesamtlänge einer Lebensmittelverarbeitungsanlage reduziert werden. Beispielsweise ist kein separater Scanner als Modul nötig, um die Länge der Käseprodukte zu ermitteln. Insbesondere wird Zeit eingespart, da die Produktriegel nicht mehr langsam an einer Messstation vorbeigeführt werden müssen.

Vorteilhafte Ausbildungen der Erfindung sind den Unteransprüchen, der Beschreibung und den Zeichnungen zu entnehmen.

Gemäß einer Ausführungsform ist zumindest eine seitliche Führung für das Käseprodukt entlang der Produktförderrichtung und/oder Trennrichtung vorgesehen. Hierdurch kann sichergestellt werden, dass das Käseprodukt in Produktförderrichtung bzw. Trennrichtung ausgerichtet ist und somit die gemessene Länge der tatsächlichen Länge des Käseproduktes entspricht. Vorzugsweise ist die seitliche Führung vor und hinter einer Trennebene des Käseteilers vorgesehen.

Die seitliche Führung kann fest an einem Gestell des Käseteilers befestigt sein. Es ist jedoch vorteilhaft, wenn die seitliche Führung quer, insbesondere senkrecht, zur Produktförderrichtung bzw. Trennrichtung verstellbar ist, um beispielsweise auf Käseprodukte unterschiedlicher Größe eingestellt zu werden. Hierzu kann die seitliche Führung linear in einer Verstellrichtung quer oder senkrecht zur Produktförderrichtung bzw. Trennrichtung verstellbar sein. Alternativ oder zusätzlich dazu kann die Führung um eine sich im Wesentlichen in Produktförderrichtung bzw. Trennrichtung erstreckende Achse schwenkbar gelagert sein.

Vorzugsweise ist eine beidseitige seitliche Führung für das Käseprodukt entlang der Produktförderrichtung und/oder Trennrichtung vorgesehen. In diesem Fall kann zumindest eine der seitlichen Führungen quer, insbesondere senkrecht, zur Produktförderrichtung bzw. Trennrichtung verstellbar sein. Vorzugsweise sind beide seitlichen Führungen quer, insbesondere senkrecht, zur Produktförderrichtung bzw. Trennrichtung verstellbar. Jede der seitlichen Führungen kann linear beweglich und/oder schwenkbar in Verstellrichtung sein.

Gemäß einer Ausführungsform ist zumindest eine seitliche Führung aktiv verstellbar. Hierzu kann ein Stellantrieb, beispielsweise ein Elektromotor, zur Verstellung der seitlichen Führung vorgesehen sein. Vorzugsweise ist die seitliche Führung auf beiden Seiten aktiv verstellbar.

Um zusätzlich eine Breitenmessung des Käseproduktes durchführen zu können, kann eine Position bzw. Bewegung zumindest einer seitlichen Führung messbar sein. Hierzu kann eine Positionsermittlungseinrichtung, beispielsweise ein Sensor, vorgesehen sein, die eine Position und/oder Bewegung zumindest einer seitlichen Führung misst.

Gemäß einer Ausführungsform ist die Positionsermittlungseinrichtung in den Stellantrieb integriert. Beispielsweise kann der Stellantrieb einen Servomotor umfassen, mittels dem eine Position der mit dem Servomotor angetriebenen seitlichen Führung ermittelbar ist. Beispielsweise kann eine Positionsermittung der seitlichen Führung auch über eine Auswertung des Motorstroms erfolgen. Hierzu kann die zumindest eine seitliche Führung zunächst relativ fest seitlich gegen das Käseprodukt gefahren werden und anschließend wieder um ein vorgebbares Maß zurückgestellt werden.

Vorzugsweise kann ein Anschlagssensor vorgesehen sein, der bei einer Zustellbewegung zumindest einer seitlichen Führung einen Anschlag der seitlichen Führung an dem Käseprodukt ermittelt. Anschließend kann der Anschlagssensor ein Signal an den Stellantrieb senden, um die Zustellbewegung zu stoppen.

Gemäß einer Alternative der Erfindung umfasst die Antriebseinheit einen Schieber und die Messeinrichtung eine Positionsermittlungseinrichtung, insbesondere einen Positionssensor, für den Schieber. So können auf einfache Weise Daten zur Position eines Endes des Käseproduktes ermittelt werden. Alternativ oder zusätzlich kann über eine Messung des Motorstroms der Antriebseinheit ermittelt werden, wie lange ein jeweiliges Käseprodukt ist. Beispielsweise erhöht sich der Motorstrom für den Antrieb des Schiebers, wenn das Käseprodukt mit den Trennwerkzeugen erstmalig in Kontakt kommt und senkt sich ab, wenn das Käseprodukt vollständig aufgeschnitten ist. Mittels einer Zeitdifferenz zwischen den Motorstromänderungen und einer Verfahrgeschwindigkeit der Antriebseinheit in diesem Zeitraum kann die Länge des Käseproduktes auf besonders einfache Weise berechnet werden.

Gemäß einer weiteren Ausführungsform umfasst die Messeinrichtung ein Detektionselement zur Detektion eines Anfangs und/oder Endes des Käseproduktes. Das Detektionselement ist vorzugsweise als optischer Sensor ausgebildet. Beispielsweise kann das Detektionselement als Laser oder als Kamera ausgebildet sein.

Vorzugsweise ist ein Detektionsfeld des Detektionselements quer zur Produktförderrichtung und/oder Trennrichtung ausgerichtet. Insbesondere kann das Detektionsfeld des Detektionselements senkrecht zur Produktförderrichtung und/oder Trennrichtung ausgerichtet sein. So kann auf einfache Weise ein Anfang und/oder Ende des Käseproduktes ermittelt werden.

Um einen Anfang und/oder eine Ende des Käseproduktes mittels des zumindest einen Trennwerkzeugs zu ermitteln, weist die Messeinrichtung gemäß einer zweiten Alternative der Erfindung einen Belastungssensor auf, der dem zumindest einen Trennwerkzeug zur Messung einer auf das Trennwerkzeug wirkenden Belastung zugeordnet ist. Sobald eine über eine Ruhebelastung herausgehende Belastung auf das Trennwerkzeug wirkt, welche einer Belastung beim Anschneiden von Käseprodukt entspricht, kann hierdurch der Anfang des Käseproduktes detektiert werden. Nimmt die Belastung auf das Trennwerkzeug wieder auf die Ruhebelastung ab, so kann hierdurch ein Ende des Käseproduktes detektiert werden.

Gemäß einem weiteren Aspekt wird ein Verfahren gemäß Anspruch 5 zum Messen einer Länge eines Käseprodukts, insbesondere eines quaderförmigen Käseproduktes, bereitgestellt.

Der Grundgedanke dieses Aspekts liegt somit darin, eine Längenmessung des Käseprodukts zumindest teilweise durchzuführen, während das Käseprodukt auf der Produktförderstrecke in einer "Warteposition" liegt, auf das zumindest eine Trennwerkzeug zu, durch das zumindest eine Trennwerkzeug hindurch, und/oder auf der Produktförderstrecke von dem zumindest einen Trennwerkzeug weg gefördert wird.

Um die Prozesszeit möglichst gut auszunutzen, kann die Längenmessung während einer Rückbewegung eines Schiebers erfolgen. Hierzu kann an dem Schieber eine Messeinrichtung vorgesehen sein, welche während der Rückbewegung des Schiebers entlang eine Käseproduktes dieses Käseprodukt vermisst.

Damit die Messung möglichst genau vorgenommen werden kann, ist es vorteilhaft, wenn das Käseprodukt während des Förderns seitlich geführt wird. Vorzugsweise wird das Käseprodukt auf der gesamten Produktförderstrecke, d.h. vor einer Trennebene und nach dieser Trennebene, seitlich geführt. Hierzu kann eine Führung an das auf der Produktförderstrecke befindliche Käseprodukt seitlich herangefahren werden, bis eine Führungsfläche der Führung an dem Käseprodukt anschlägt. Wenn die seitliche Führung an beiden Seiten mit dem Käseprodukt in Kontakt steht, kann mittels eines Abstandes zwischen seitlichen Führungsflächen der Führungen eine Breite des Käseproduktes ermittelt werden.

Gemäß einer Alternative der Erfindung wird während der Längenmessung eine Position eines Schiebers des Käseteilers zur Positionsbestimmung des Endes des Käseprodukts verwendet. Der Schieber ist in aller Regel bereits Teil des Käseteilers und schiebt das Käseprodukt durch das zumindest eine Trennwerkzeug. Da sich der Schieber während des Förderns also am Ende des Käseproduktes befindet, kann durch Messung der Position des Schiebers auf einfache Weise ermittelt werden, wo sich das Ende des Käseproduktes zu einem jeweiligen Zeitpunkt befindet.

Zusätzlich kann zur Längenmessung mittels eines, insbesondere als optischer Sensor ausgebildeten, Detektionselements ermittelt werden, ob sich das aufzuschneidende Käseprodukt zu einem bestimmten Zeitpunkt an einer bestimmten Position entlang der Förderstrecke befindet. Insbesondere kann mit dem Detektionselement ermittelt werden, ob ein Anfang und/oder Ende des Käseproduktes ein Detektionsfeld des Detektionselements zu einem Zeitpunkt passiert. Das Detektionsfeld liegt vorzugsweise in einer Ebene, deren Normalenvektor in Produktförderrichtung bzw. Trennrichtung ausgerichtet ist.

Gemäß einer Ausführungsform kann zu einem bestimmten Zeitpunkt eine Position des Anfangs des Käseproduktes und eine Position des Endes des Käseproduktes ermittelt werden und die Länge anhand eines Abstandes der Positionen in Produktförderrichtung und/oder Trennrichtung ermittelt werden. Beispielsweise kann eine Position des Anfangs des Käseproduktes mittels des Belastungssensors oder des Detektionselements ermittelt werden und eine entsprechende Position des Endes des Käseproduktes zeitgleich anhand der Position des Schiebers ermittelt werden.

Alternativ dazu kann ein erster Zeitpunkt, an dem der Anfang des Käseproduktes eine bestimmte Position entlang der Produktförderstrecke einnimmt, ermittelt werden und ein zweiter Zeitpunkt, an dem das Ende des Käseproduktes die bestimmte Position entlang der Produktförderstrecke einnimmt, ermittelt werden und eine Zeitdifferenz zwischen dem ersten Zeitpunkt und dem zweiten Zeitpunkt zur Berechnung der Länge des Käseproduktes verwendet werden. Hierzu ist es zur einfacheren Berechnung vorteilhaft, wenn das Käseprodukt zwischen dem ersten Zeitpunkt und dem zweiten Zeitpunkt mit einer bekannten, konstanten Geschwindigkeit gefördert wird. Alternativ dazu kann das Käseprodukt mit einer inkonstanten Geschwindigkeit gefördert werden. In diesem Fall bietet sich an, die Geschwindigkeit des Schiebers über die Zeit aufzuzeichnen, das Integral unter der Geschwindigkeitskurve zwischen dem ersten und zweiten Zeitpunkt zu bilden, und anhand des Integrals eine der Länge des Käseprodukts entsprechende Strecke zu berechnen.

Gemäß einer weiteren Alternative der Erfindung kann zur Längenmessung eine Belastung auf das Trennwerkzeug gemessen werden. Beispielsweise kann ein Belastungsanstieg auf das Trennwerkzeug detektiert werden, um zu ermitteln, dass sich der Anfang eines Käseproduktes auf Höhe des zumindest einen Trennwerkzeugs, d.h. auf Höhe der Trennebene, befindet. Alternativ oder zusätzlich kann ein Belastungsabfall auf das Trennwerkzeug detektiert werden, um zu ermitteln, dass das Ende eines Käseproduktes die Trennebene des Käseteilers passiert hat.

Gemäß einer weiteren Ausführungsform kann ein Motorstrom wenigstens eines Antriebs eines Schiebers gemessen werden. Mittels Änderungen beim gemessenen Motorstrom kann detektiert werden, wenn der Schieber mit dem Käseprodukt in Kontakt kommt, das Käseprodukt mit dem Trennwerkzeug in Kontakt kommt oder das Trennwerkzeug das Käseprodukt vollständig durchtrennt hat. Vorzugsweise wird der Motorstrom des Antriebs des Schiebers zur Längenmessung des Käseproduktes verwendet. Alternativ oder zusätzlich kann ein Motorstrom wenigstens eines Antriebs einer seitlichen Führung gemessen werden. Hierdurch kann detektiert werden, wenn die seitliche Führung mit dem Käseprodukt in Kontakt kommt. Vorzugsweise wird der Motorstrom des Antriebs der seitlichen Führung dazu verwendet, die Breite eines Käseproduktes zu ermitteln.

Zur Messung der Länge des Käseprodukts sind jegliche Kombinationen der zuvor genannten Verfahrensschritte denkbar, sofern diese im Schutzbegehren der Ansprüche liegen. Beispielsweise wäre denkbar, mit dem Detektionselement einen Anfang des Käseproduktes zu detektieren und mittels der Position des Schiebers zu diesem Zeitpunkt die Länge des Käseproduktes zu berechnen.

Prinzipiell ist auch denkbar, zwei separate Längenmessungen mittels unterschiedlicher Funktionselemente vorzunehmen, und einen Abgleich der beiden Messungen vorzunehmen, um Messfehler erkennen zu können.

Nachfolgend wird die Erfindung anhand rein beispielhafter Ausführungsformen unter Bezugnahme auf die beigefügten Zeichnungen beschrieben. Es zeigen:
- Fig. 1: eine schematische perspektivische Darstellung eines erfindungsgemäßen Käseteilers;
- Fig. 2: eine schematische Draufsicht auf den Käseteiler von Fig. 1;
- Fig. 3A: eine schematische Darstellung eines ersten Schrittes einer Längenmessung gemäß einer ersten Ausführungsform;
- Fig. 3B: eine schematische Darstellung eines zweiten Schrittes einer Längenmessung gemäß einer ersten Ausführungsform;
- Fig. 4A: eine schematische Darstellung eines ersten Schrittes einer Längenmessung gemäß einer weiteren, nicht erfindungsgemäßen Ausführungsform; und
- Fig. 4B: eine schematische Darstellung eines zweiten Schrittes der Längenmessung gemäß der weiteren, nicht erfindungsgemäßen Ausführungsform.

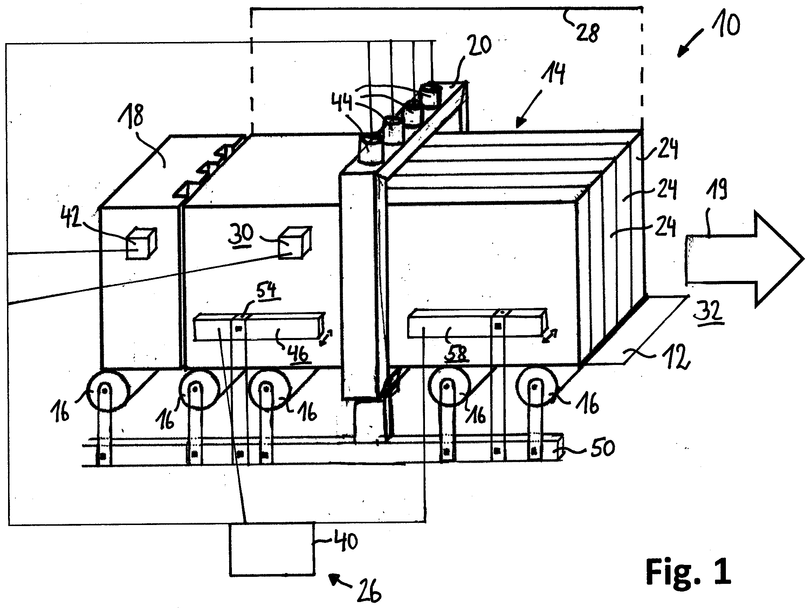

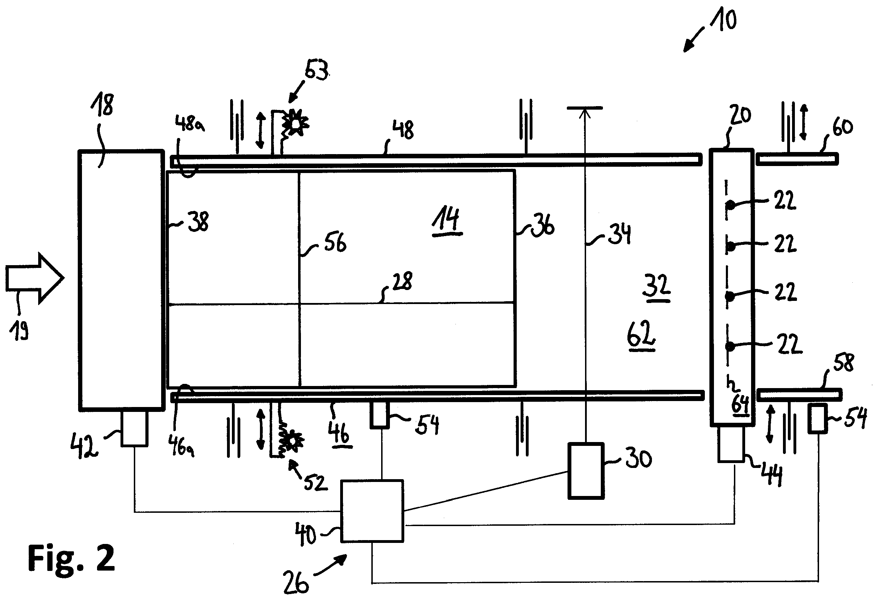

Fig. 1 zeigt einen Käseteiler 10 mit einer waagrechten Auflageebene 12 für ein Käseprodukt 14, die im vorliegenden Beispiel durch mehrere Rollen 16 gebildet wird. Zudem umfasst der Käseteiler 10 eine als Schieber 18 ausgebildete Antriebseinheit, um das Käseprodukt in Produktförderrichtung 19 durch einen Schneidrahmen 20 hindurchzudrücken. In dem Schneidrahmen 20 sind mehrere, im vorliegenden Beispiel vier, Trennwerkzeuge 22 (siehe Fig. 2), eingespannt, um das Käseprodukt 14 in Längsrichtung in mehrere Produktriegel 24 zu trennen.

Der Käseteiler 10 verfügt zudem über eine Messeinrichtung 26, um eine Länge 28 des Käseproduktes 14 zu messen. Die Messeinrichtung 26 umfasst ein Detektionselement 30, welches als Laser ausgebildet ist. Dieses Detektionselement 30 kann, wie dargestellt, seitlich neben einem Produktförderraum 32 angeordnet sein und ein Detektionsfeld 34 (siehe Fig. 2) definieren, welches sich senkrecht zur Produktförderrichtung 19 bis zur anderen Seite des Produktförderraums 32 erstreckt. Das Detektionselement 30 kann aber auch oberhalb oder unterhalb des Produktförderraums 32 angeordnet sein und ein Detektionsfeld 34 definieren, welches nach oben oder nach unten den Produktförderraum 32 durchquert. Das Detektionselement 30 ist dazu ausgebildet und eingerichtet, eine Bewegung eines Anfangs 36 und eines Endes 38 des Käseproduktes 14 durch das Detektionsfeld 34 zu detektieren. Das Detektionselement 30 ist mit einer zentralen Längenberechnungseinrichtung 40 verbunden, sodass das Detektionselement 30, sobald eine Bewegung des Anfangs 36 oder des Endes 38 des Käseproduktes 14 durch das Detektionsfeld 34 ermittelt wird, diese Information an die Längenberechnungseinrichtung 40 übermitteln kann.

Zudem umfasst die Messeinrichtung 26 einen Positionssensor 42, welcher eine Ist-Position des Schiebers 18 in Produktförderrichtung 19 misst und diese Ist-Position an die Längenberechnungseinrichtung 40 übermittelt. So kann die Längenberechnungseinrichtung 40 eine aktuelle Position des Schiebers 18 und damit auch des Endes 38 des Käseproduktes 14 abfragen. Weiterhin umfasst die Messeinrichtung 26 einen oder mehrere Belastungssensoren 44, um eine Belastung auf die Trennwerkzeuge 22 zu messen. Beispielsweise kann, wie in Fig. 1 gezeigt, jedem der Trennwerkzeuge 22 ein Belastungssensor 44 zugeordnet sein, welcher eine auf das jeweilige Trennwerkzeug 22 wirkende Zugkraft misst.

Um eine präzise Längenmessung zu erhalten, sind vor dem Schneidrahmen 20 auf beiden Seiten des Produktförderraums 32 seitliche Führungen 46, 48 (siehe Fig. 2) angeordnet. Die seitlichen Führungen 46, 48 sind, wie in Fig. 2 durch kleine Pfeile angedeutet, linear beweglich an einem Gestell 50 des Käseteilers 10 angeordnet. Hierdurch lässt sich ein Abstand zwischen den seitlichen Führungen 46, 48 und somit eine Breite des Produktförderraums 32 einstellen. Wie in Fig. 2 zu sehen ist, ist ein Stellantrieb 52 vorgesehen, um die seitliche Führung 46 senkrecht zur Produktförderrichtung 19 in Richtung der seitlichen Führung 48 zu verstellen. Analog dazu ist ein Stellantrieb 53 vorgesehen, um die seitliche Führung 48 senkrecht zur Produktförderrichtung 19 in Richtung der seitlichen Führung 46 zu verstellen. Zudem ist eine Positionsermittlungseinrichtung 54 vorgesehen, um eine Position der seitlichen Führung 46 und somit einen Abstand zwischen Führungsflächen 46a, 48a der seitlichen Führungen 46, 48 zu ermitteln. Hierdurch kann letztendlich eine Breite 56 des Käseproduktes 14 ermittelt werden.

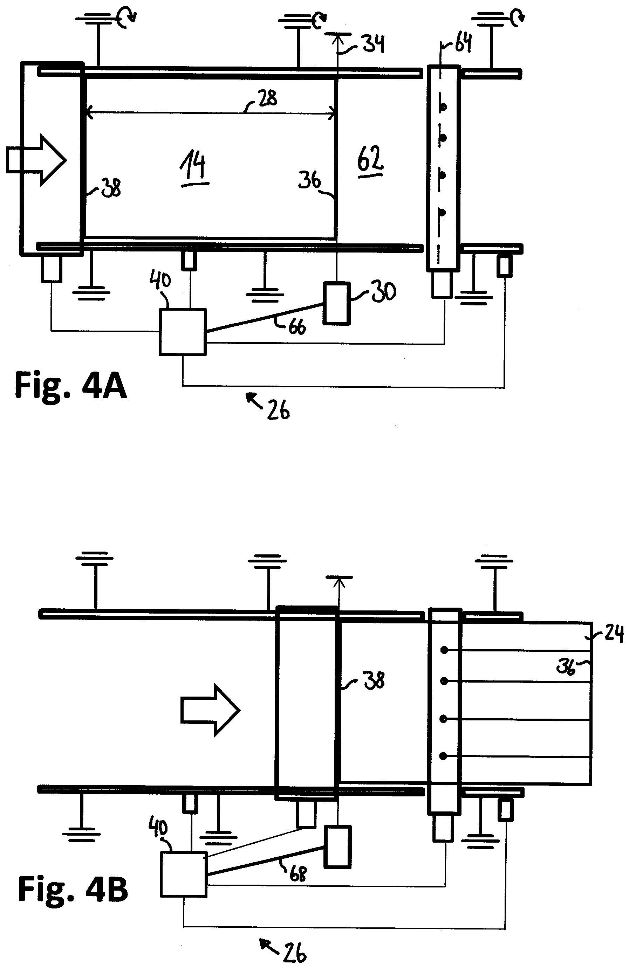

Zudem sind hinter dem Schneidrahmen 20 ebenfalls auf beiden Seiten des Produktförderraums 32 seitliche Führungen 58, 60 angeordnet, welche ebenfalls, wie in Fig. 2 durch kleine Pfeile angedeutet, linear beweglich an dem Gestell 50 des Käseteilers 10 angeordnet sind. Auch diese seitlichen Führungen 58, 60 können, wie die seitlichen Führungen 46, 48, durch Stellantriebe aufeinander zu und voneinander weg bewegt werden. Alternativ dazu können die seitlichen Führungen 46, 48, 58, 60 schwenkbar an dem Gestell 50 angeordnet sein, wie dies schematisch in Fig. 4A und 4B gezeigt ist.

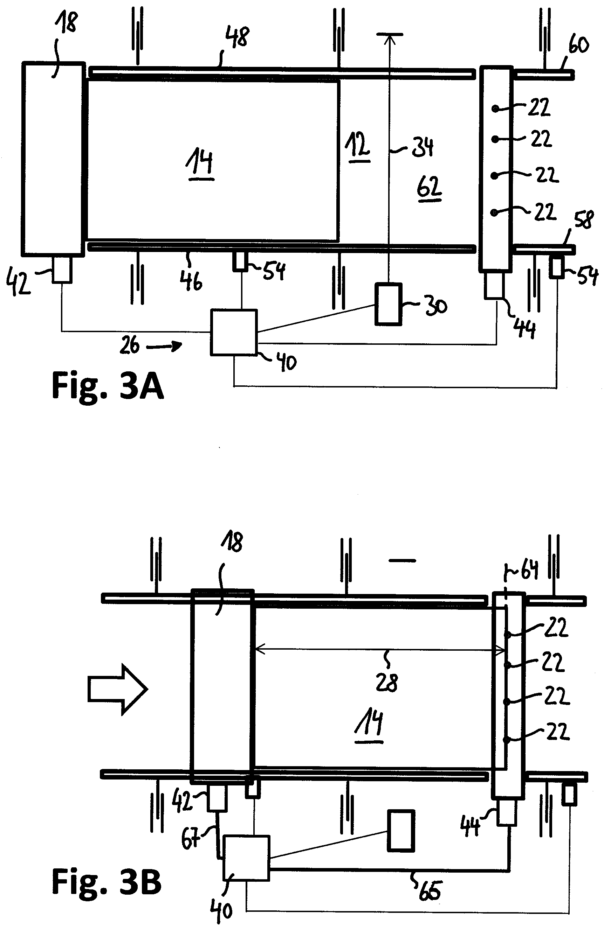

Die Figuren 3A und 3B zeigen eine erste Ausführungsform eines Verfahrens, wie mit dem zuvor beschriebenen Käseteiler 10 die Länge 28 des Käseprodukts 14 gemessen werden kann. Zunächst wird in einem ersten Schritt (siehe Fig. 3A) das Käseprodukt 14 auf der Auflageebene 12 an einem Anfang einer Produktförderstrecke 62 des Käseteilers 10 positioniert. Anschließend wird das Käseprodukt 14 von dem Schieber 18 entlang der Produktförderstrecke 62 bewegt, bis das Käseprodukt 14, wie in Fig. 3B dargestellt, mit den Trennwerkzeugen 22 in Kontakt kommt. Hierdurch erfahren die Trennwerkzeuge 22 eine erhöhte Belastung, welche von dem Belastungssensor 44 detektiert wird. Zum Zeitpunkt der Detektion der erhöhten Belastung wird ein Signal 65 an die Längenberechnungseinrichtung 40 gesendet. Zudem liest die Längenberechnungseinrichtung 40 zu diesem Zeitpunkt ein Positionssignal 67 des Schiebers 18 aus, welches durch den Positionssensor 42 ermittelt wird. Mittels der Position des Schiebers 18 zum Zeitpunkt der Detektion der erhöhten Belastung an den Trennwerkzeugen 22 berechnet die Längenberechnungseinrichtung 40 einen Abstand zwischen dem Schieber 18 und den Trennwerkzeugen 22 bzw. einer Trennebene 64. Dieser Abstand entspricht der Länge 28 des Käseproduktes 14.

Analog dazu kann die Länge 28 des Käseproduktes 14 auch dadurch ermittelt werden, dass bei Eintritt des Anfangs 36 des Käseprodukts 14 in das Detektionsfeld 34 des Detektionselement 30 (siehe Fig. 4A) die Position des Schiebers 18 ermittelt wird und entsprechend die Länge 28 des Käseproduktes durch einen Abstand zwischen dem Schieber 18 und dem Detektionsfeld 34 ermittelt wird.

Die Figuren 4A und 4B zeigen eine weitere, nicht erfindungsgemäße, Ausführungsform eines Verfahrens, wie mit dem zuvor beschriebenen Käseteiler 10 die Länge 28 des Käseprodukts 14 gemessen werden kann. Das Käseprodukt 14 wird mit einer bekannten Geschwindigkeit entlang der Produktförderstrecke 62 auf die Trennebene 64 zugeschoben. Wenn der Anfang 36 des Käseprodukts 14 in das Detektionsfeld 34 des Detektionselements 30 kommt, wird ein erstes Signal 66 (siehe Fig. 4A) an die Längenberechnungseinrichtung 40 gesendet. Das Käseprodukt 14 wird derweil entlang der Produktförderstrecke 62 weitergeschoben, bis das Ende 38 des Käseproduktes 14 in das Detektionsfeld 34 des Detektionselement 30 kommt bzw. dieses verlässt. Zu diesem Zeitpunkt wird ein zweites Signal 68 (siehe Fig. 4B) an die Längenberechnungseinrichtung 40 gesendet. Die Längenberechnungseinrichtung 40 errechnet aus einer Zeitdifferenz Δt zwischen den Signalen und der bekannten Geschwindigkeit v des Schiebers 18 mittels der Formel s=v*Δt eine zurückgelegte Strecke s des Käseproduktes 14 zwischen dem ersten und zweiten Signal 66, 68. Die zurückgelegte Strecke s entspricht der Länge 28 des Käseprodukts 14.

Um Messfehler besser ausschließen zu können, können beide der zuvor beschriebenen Verfahren zur Längenmessung gleichzeitig ausgeführt werden und so redundante Messergebnisse erhalten werden.

### Bezugszeichenliste

- 10: Käseteiler
- 12: Auflageebene
- 14: Käseprodukt
- 16: Rolle
- 18: Schieber
- 19: Produktförderrichtung
- 20: Schneidrahmen
- 22: Trennwerkzeuge
- 24: Produktriegel
- 26: Messeinrichtung
- 28: Länge (Käseprodukt)
- 30: Detektionselement
- 32: Produktförderraum
- 34: Detektionsfeld
- 36: Anfang (Käseprodukt)
- 38: Ende (Käseprodukt)
- 40: Längenberechnungseinrichtung
- 42: Positionssensor
- 44: Belastungssensor
- 46: seitliche Führung
- 46a: Führungsfläche
- 48: seitliche Führung
- 48a: Führungsfläche
- 50: Gestell
- 52: Stellantrieb
- 53: Stellantrieb
- 54: Positionsermittlungseinrichtung
- 56: Breite (Käseprodukt)
- 58: seitliche Führung
- 60: seitliche Führung
- 62: Produktförderstrecke
- 64: Trennebene
- 65: Signal
- 66: erstes Signal
- 67: Positionssignal
- 68: zweites Signal

## Patentansprüche

1. Käseteiler (10) mit
zumindest einer Antriebseinheit (18) und
zumindest einem Trennwerkzeug (22),
wobei die Antriebseinheit (18) dazu ausgebildet und eingerichtet ist, ein Käseprodukt (14) in einer Produktförderrichtung (19) durch das zumindest eine Trennwerkzeug (22) hindurch zu fördern und/oder wobei die Antriebseinheit dazu ausgebildet und eingerichtet ist, das zumindest eine Trennwerkzeug in einer Trennrichtung durch das Käseprodukt hindurch zu bewegen, und wobei der Käseteiler (10) eine Messeinrichtung (26) zur Längenmessung des Käseproduktes (14) aufweist,
**dadurch gekennzeichnet**
**dass** die Messeinrichtung (26) eine Positionsermittlungseinrichtung (42) für einen Schieber (18) der Antriebseinheit umfasst; und/oder
**dass** die Messeinrichtung (26) einen Belastungssensor (44) aufweist, der dem zumindest einen Trennwerkzeug (22) zur Messung einer auf das Trennwerkzeug (22) wirkenden Belastung zugeordnet ist.

2. Käseteiler (10) nach Anspruch 1,
wobei eine, insbesondere beidseitige, seitliche Führung (46, 48, 58, 60) für das Käseprodukt (14) entlang der Produktförderrichtung (19) und/oder Trennrichtung vorgesehen ist.

3. Käseteiler (10) nach einem der vorherigen Ansprüche,
wobei die Messeinrichtung (26) ein, insbesondere als optischer Sensor ausgebildetes, Detektionselement (30) zur Detektion eines Anfangs (36) und/oder Endes (38) des Käseproduktes (14) umfasst.

4. Käseteiler (10) nach Anspruch 3,
wobei ein Detektionsfeld (34) des Detektionselements (30) quer zur Produktförderrichtung (19) und/oder Trennrichtung ausgerichtet ist.

5. Verfahren zum Messen einer Länge (28) eines Käseprodukts (14), insbesondere eines quaderförmigen Käseprodukts (14), mit den Schritten:
- Positionieren des Käseprodukts (14) auf einer Produktförderstrecke (62) eines Käseteilers (10);
- Fördern des Käseprodukts (14) in Richtung eines oder mehrerer Trennwerkzeuge (44) des Käseteilers (10), die dazu ausgebildet und eingerichtet sind, das Käseprodukt (14) entlang seiner Längsrichtung in mehrere Produktriegel (24) zu trennen;
wobei während des Förderns des Käseprodukts (14) und/oder einer Bewegung einer Antriebseinheit (18) des Käseteilers (10) die Länge (28) des Käseprodukts (14) gemessen wird, und
wobei während der Längenmessung eine Position eines Schiebers (18) des Käseteilers (10) zur Positionsbestimmung des Endes (38) des Käseprodukts (14) verwendet wird und/oder
wobei zur Längenmessung eine Belastung auf das Trennwerkzeug (22) gemessen wird.

6. Verfahren nach Anspruch 5,
wobei das Käseprodukt (14) während des Förderns seitlich geführt wird.

7. Verfahren nach einem der vorherigen Verfahrensansprüche,
wobei zur Längenmessung mittels eines, insbesondere als optischer Sensor ausgebildeten, Detektionselements (30) ermittelt wird, ob an wenigstens einer bestimmten Position entlang der Produktförderstrecke (62) das Käseprodukt (14) vorhanden ist.

8. Verfahren nach einem der vorherigen Verfahrensansprüche,
wobei zu einem bestimmten Zeitpunkt eine Position des Anfangs (36) des Käseproduktes (14) und eine Position des Endes (38) des Käseproduktes (14) ermittelt wird und die Länge (28) anhand eines Abstandes der Positionen in Produktförderrichtung (19) und/oder Trennrichtung ermittelt wird oder wobei ein erster Zeitpunkt, an dem der Anfang (36) des Käseproduktes (14) eine bestimmte Position entlang der Produktförderstrecke (62) einnimmt, ermittelt wird und ein zweiter Zeitpunkt, an dem das Ende (38) des Käseproduktes (14) die bestimmte Position entlang der Produktförderstrecke (62) einnimmt, ermittelt wird und eine Zeitdifferenz zwischen dem ersten Zeitpunkt und dem zweiten Zeitpunkt zur Berechnung der Länge (28) des Käseproduktes (14) verwendet wird.

9. Verfahren nach einem der vorherigen Verfahrensansprüche,
wobei ein Motorstrom wenigstens eines Antriebs eines Schiebers (18) und/oder einer seitlichen Führung (46, 48, 58, 60) gemessen wird.

## Claims

1. A cheese divider (10) comprising
at least one drive unit (18) and
at least one separating tool (22),
wherein the drive unit (18) is configured and set up to convey a cheese product (14) in a product conveying direction (19) through the at least one separating tool (22) and/or wherein the drive unit is configured and set up to move the at least one separating tool in a separating direction through the cheese product, and
wherein the cheese divider (10) has a measurement device (26) for a length measurement of the cheese product (14),
**characterized in that**
the measurement device (26) comprises a position determination device (42) for a slider (18) of the drive unit; and/or
**in that** the measurement device (26) has a load sensor (44) which is assigned to the at least one separating tool (22) for measuring a load acting on the separating tool (22).

2. A cheese divider (10) according to claim 1,
wherein a lateral guide (46, 48, 58, 60), in particular at both sides, is provided for the cheese product (14) along the product conveying direction (19) and/or the separating direction.

3. A cheese divider (10) according to one of the preceding claims,
wherein the measurement device (26) comprises a detection element (30), which is in particular configured as an optical sensor, for detecting a start (36) and/or an end (38) of the cheese product (14).

4. A cheese divider (10) according to claim 3,
wherein a detection field (34) of the detection element (30) is oriented transversely to the product conveying direction (19) and/or the separating direction.

5. A method for measuring a length (28) of a cheese product (14), in particular a cuboid cheese product (14), comprising the steps:
- positioning the cheese product (14) on a product conveying path (62) of a cheese divider (10);
- conveying the cheese product (14) in the direction of one or more separating tools (44) of the cheese divider (10) that are configured and set up to separate the cheese product (14) along its longitudinal direction into a plurality of product bars (24);
wherein the length (28) of the cheese product (14) is measured during the conveying of the cheese product (14) and/or a movement of a drive unit (18) of the cheese divider (10), and
wherein, during the length measurement, a position of a slider (18) of the cheese divider (10) is used to determine the position of the end (38) of the cheese product (14), and/or
wherein, for the length measurement, a load on the separating tool (22) is measured.

6. A method according to claim 5,
wherein the cheese product (14) is laterally guided during the conveying.

7. A method according to any one of the preceding method claims,
wherein, for the length measurement, it is determined by means of a detection element (30), which is in particular configured as an optical sensor, whether the cheese product (14) is present at at least one specific position along the product conveying path (62).

8. A method according to any one of the preceding method claims,
wherein a position of the start (36) of the cheese product (14) and a position of the end (38) of the cheese product (14) are determined at a specific point in time and the length (28) is determined based on a distance of the positions in the product conveying direction (19) and/or the separating direction, or
wherein a first point in time at which the start (36) of the cheese product (14) assumes a specific position along the product conveying path (62) is determined and a second point in time at which the end (38) of the cheese product (14) assumes the specific position along the product conveying path (62) is determined and a time difference between the first point in time and the second point in time is used to calculate the length (28) of the cheese product (14).

9. A method according to any one of the preceding method claims,
wherein a motor current of at least one drive of a slider (18) and/or of a lateral guide (46, 48, 58, 60) is measured.

## Revendications

1. Diviseur de fromage (10) comprenant
au moins une unité d'entraînement (18) et
au moins un outil de séparation (22),
l'unité d'entraînement (18) étant conçue et agencée pour transporter un produit fromager (14) dans une direction de transport de produits (19) à travers ledit au moins un outil de séparation (22), et/ou l'unité d'entraînement étant conçue et agencée pour déplacer ledit au moins un outil de séparation dans une direction de séparation à travers le produit fromager, et
le diviseur de fromage (10) comportant un dispositif de mesure (26) pour mesurer la longueur du produit fromager (14),
**caractérisé en ce que**
le dispositif de mesure (26) comprend un dispositif de détermination de position (42) pour un poussoir (18) de l'unité d'entraînement ; et/ou
**en ce que** le dispositif de mesure (26) comporte un capteur de charge (44) qui est associé audit au moins un outil de séparation (22) pour mesurer une charge agissant sur l'outil de séparation (22).

2. Diviseur de fromage (10) selon la revendication 1,
dans lequel est prévu un guide latéral (46, 48, 58, 60), en particulier bilatéral, pour le produit fromager (14) le long de la direction de transport de produits (19) et/ou de la direction de séparation.

3. Diviseur de fromage (10) selon l'une des revendications précédentes,
dans lequel le dispositif de mesure (26) comprend un élément de détection (30), réalisé en particulier sous la forme d'un capteur optique, pour détecter un début (36) et/ou une fin (38) du produit fromager (14).

4. Diviseur de fromage (10) selon la revendication 3,
dans lequel un champ de détection (34) de l'élément de détection (30) est orienté transversalement par rapport à la direction de transport de produits (19) et/ou à la direction de séparation.

5. Procédé pour mesurer une longueur (28) d'un produit fromager (14), en particulier d'un produit fromager parallélépipédique (14), comprenant les étapes consistant à :
- positionner le produit fromager (14) sur une voie de transport de produits (62) d'un diviseur de fromage (10) ;
- transporter le produit fromager (14) en direction d'un ou plusieurs outils de séparation (44) du diviseur de fromage (10), qui sont conçus et agencés pour séparer le produit fromager (14) le long de sa direction longitudinale en plusieurs barres de produit (24) ;
dans lequel
la longueur (28) du produit fromager (14) est mesurée pendant le transport du produit fromager (14) et/ou pendant un mouvement d'une unité d'entraînement (18) du diviseur de fromage (10), et
pendant la mesure de la longueur, une position d'un poussoir (18) du diviseur de fromage (10) est utilisée pour déterminer la position de la fin (38) du produit fromager (14), et/ou
pour la mesure de la longueur, une charge sur l'outil de séparation (22) est mesurée.

6. Procédé selon la revendication 5,
dans lequel le produit fromager (14) est guidé latéralement pendant le transport.

7. Procédé selon l'une des revendications précédentes,
dans lequel, pour la mesure de la longueur, à l'aide d'un élément de détection (30) conçu en particulier sous la forme d'un capteur optique, il est déterminé si le produit fromager (14) est présent à au moins une position définie le long de la voie de transport de produits (62) du produit fromager (14).

8. Procédé selon l'une des revendications précédentes,
dans lequel, à un moment défini, une position du début (36) du produit fromager (14) et une position de la fin (38) du produit fromager (14) sont déterminées, et la longueur (28) est déterminée à partir d'une distance entre les positions dans la direction de transport de produits (19) et/ou dans la direction de séparation, ou
un premier moment est déterminé, auquel le début (36) du produit fromager (14) occupe une position définie le long de la voie de transport de produits (62), et un deuxième moment est déterminé, auquel la fin (38) du produit fromager (14) occupe la position définie le long de la voie de transport de produits (62), et une différence de temps entre le premier moment et le deuxième moment est utilisée pour calculer la longueur (28) du produit fromager (14).

9. Procédé selon l'une des revendications précédentes,
dans lequel un courant moteur d'au moins un entraînement d'un poussoir (18) et/ou d'un guide latéral (46, 48, 58, 60) est mesuré.
